# EUROPEAN PATENT SPECIFICATION

(11) **EP 0 294 831 B1**
(45) Date of publication and mention of the grant of the patent: **11.05.1994**
(21) Application number: 88109279.5
(22) Date of filing: 10.06.1988
(51) Int. Cl.: G11B 7/00, G11B 7/013

(54) **Wavelength selective optical recording and reproducing method**
Für Wellenlängen selektive optische Aufzeichnungs- und Wiedergabemethode
Méthode d'enregistrement et de reproduction optique sélective en fonction de la longueur d'onde

(30) Priority: 12.06.1987 JP 147382/87
(43) Date of publication of application: 14.12.1988
(73) Proprietor: MITSUBISHI DENKI KABUSHIKI KAISHA, Tokyo 100 (JP)
(72) Inventor: Tadokoro, Michihiro Mitsubishi Denki K.K., Amagasaki Hyogo (JP); Yoshimura, Motomu Mitsubishi Denki K.K., Amagasaki Hyogo (JP); Maeda, Mitsuo Mitsubishi Denki K.K., Amagasaki Hyogo (JP); Okada, Kazuo Mitsubishi Denki K.K., Amagasaki Hyogo (JP)
(74) Representative: Lehn, Werner, Dipl.-Ing.

(56) References cited:
- EP-A- 0 233 984
- PROCEEDINGS OF THE INTERNATIONAL SOCIETY FOR OPTICAL ENGINEERING vol. 421, 9June 83, ARLINGTON VIRGINIA page 85 - 90; IMANAKA ET AL.: "OPTICAL DISC MEMORYSYSTEM"
- APPLIED OPTICS. vol. 25, no. 18, September 1986, NEW YORK US page 3207 - 3215;SCHELLENBERG ET AL.: "TECHNOLOGICAL ASPECTS OF FREQUENCY DOMAIN DATA STORAGE
- USING PERSISTENT SPECTRAL HOLE BURNING"

## Description

### BACKGROUND OF THE INVENTION

The present invention relates to a wavelength selective optical recording and reproducing method.

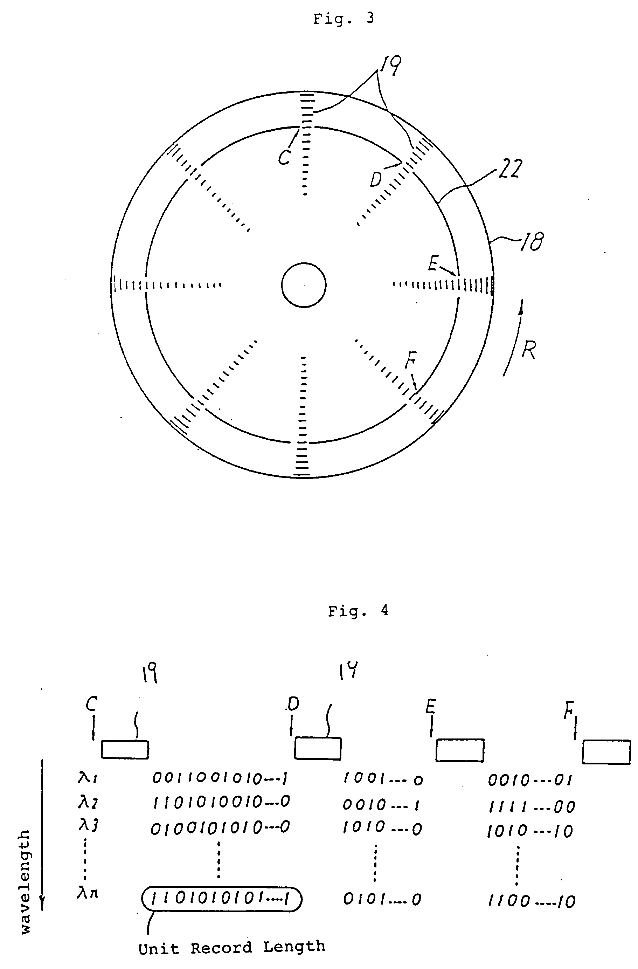

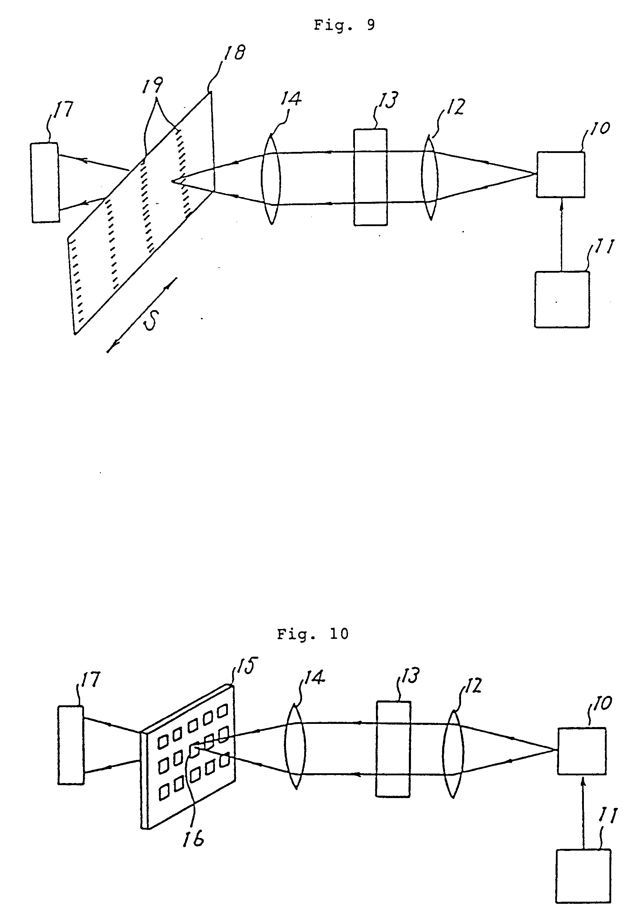

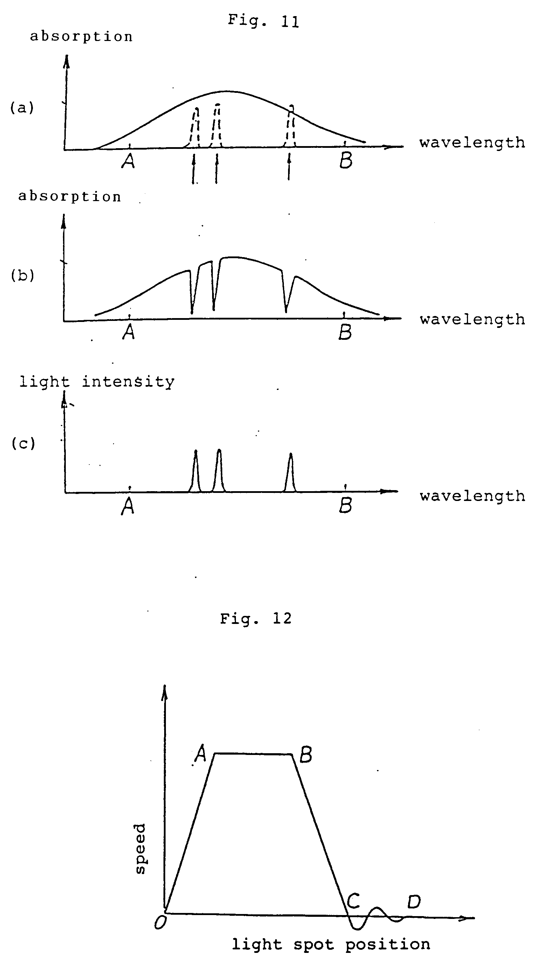

An example of a conventional wavelength selective recording and reproducing device is shown in U.S. Patent No. 4,101,976. Fig. 10 of this application shows the construction thereof schematically and Figs. 11a, 11b and 11c correspond to Figs. 3, 4 and 5 of the U.S. Patent, respectively.

In Fig. 10, the recording and reproducing device is constituted with a wavelength variable light source 10, a wavelength controller 11 for changing wavelength of the light source 10, a collimator lens 12 for collimating light from the light source 10 into parallel beam an optical deflector 13, an objective lens 14 for condensing light from the light source 10 to a minute spot and directing it onto a recording medium 15, a memory element 16 selected by the optical deflector 13 from memory elements of the recording medium 15 and an optical sensor 17 for detecting light passed through the selected memory element 16.

Light from the light source 10 is collimated by the collimator lens 12 to parallel light and after condensed by the objective lens 14 to a light spot directed onto the selected memory element 16 on the recording medium 15. The selection of the memory element is performed arbitrarily by the optical deflector 13. The principle of recording and reproducing of wavelength selective information on the selected memory element 16 will be described with reference to Figs. 11a, 11b and 11c.

In Fig. 11a which shows an absorption spectrum of the recording medium prior to the wavelength selective recording, the spectrum is broadly spreaded. When such medium is irradiated with light having a light intensity spectrum such as shown by a dotted line in Fig. 11a, the absorption spectrum provides sharp negative spikes at wavelengths of the irradiating light as shown in Fig. 11b. The negative spike is called as "spectral hole". When such hole occurs, it is considered that a data "1" is stored at the corresponding wavelength and a data "0" is stored at any other wavelength at which no spectral hole occurs. In order to form a hole at any arbitrary wavelength, wavelength of the light source 10 is regulated by the wavelength controller 11 to a value at the wavelength of the hole to be recorded and to increase light intensity of the light source 10 to a value necessary to perform a recording. On the other hand, in order to readout signals from the medium on which informations are recorded in wavelength selective mode such as shown in Fig. 11b, a wavelength scanning is performed from an upper limit A to a lower limit B of memory wavelength range with intensity of the light source 10 constant.
Since the absorptivity is reduced at the respective hole wavelength as shown in Fig. 11b, optical intensity spectrum such as shown in Fig. 11c is obtained by detecting light passed through the medium 15 by using the optical detector 17. Although Fig. 11c shows wavelength spectrum, it is possible to obtain a reproduced signal output at an output of the optical detector 17 by scanning the wavelength at a constant speed in time. The reproduced signal is in time-series, that it, a time series of signals forming an information.

The article entitled "Technological Aspects of Frequency Domain Data Storage using Persistent Spectral Hole Burning", by Schellenberg et alia, in "Applied Optics", Vol. 25, No. 18, September 1986, pages 3207-3215, describes a method, a storage device and writing/reading equipment using the principle of spectral hole burning. The method is described in which a laser is tuned to produce a ramp function in the frequency domain over a range of typically 100 GHz with a time period of about 30 microseconds. To improve detection the laser output signal is modulated by a 4 kHz dither signal which is used for synchronisation with a lock-in amplifier. The stored data is scanned through the frequency range before moving to a new position on the recording medium, at which the procedure is repeated.
The non-prepublished document EP-A-0233984 describes an amendment of the above method in which the ramp function of frequency is not a linear function but a series of frequency steps.

In the conventional wavelength selective optical recording and reproducing device constructed as above, a time series signal existing in a memory element which is wavelength-scanned to reproduce information contained therein will be lost completely if the memory element becomes inoperative for some reason.

### SUMMARY OF THE INVENTION

An object of the present invention is to provide a reliable wavelength selective recording and reproducing method which is capable of compensating for loss of information due to inoperative portion of a memory device.

The object of the invention is solved by a method of optically recording and reproducing an information by condensing a light beam from a wavelength variable light source on recording tracks of a recording medium capable of being wavelength-selectively recorded and reproduced, comprising the steps of: performing recording on or reproducing from a first track at a first predetermined wavelength at least during one information record comprising several thousand bits of information on said recording medium; repeating the above step for other predetermined wavelengths and the same and/or other tracks sequentially.
Fig. 1 shows a construction of a wavelength selective optical recording and reproducing device to which an embodiment of the present invention is applied;
Fig. 2 shows a construction of a wavelength selective recording and reproducing device to which another embodiment of the present invention is applied;
Figs. 3 to 8 show an operational principle of the present invention;
Fig. 9 shows a construction of a wavelength selective recording and reproducing device to which a further embodiment of the present invention is applied;
Fig. 10 shows a construction of a conventional wavelength selective optical recording and reproducing device;
Figs. 11a, 11b and 11c show an operation of the device shown in Fig. 10; and
Fig. 12 shows a high speed searching of the conventional device.

### DETAILED DESCRIPTION OF THE PREFERRED EMBODIMENTS

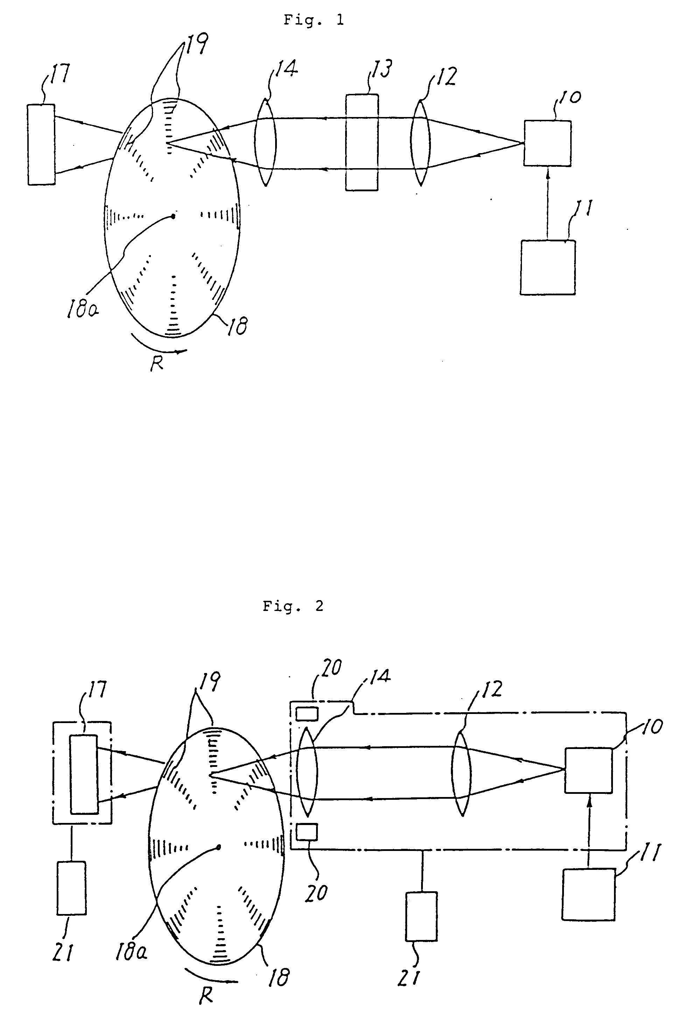

An embodiment of the present invention will be described with reference to the accompanying drawings in which same reference numerals are used to depict same or corresponding components, respectively. In Fig. 1 which shows an embodiment of the present invention, reference numerals 10 to 14 and 17 depict the same components as those shown in Fig. 10, respectively. A reference numeral 18 depicts a disc shaped recording medium which has a header 19 thereon. Since, in this embodiment, a function of an optical deflector 13 which is similar to that shown by the same reference numeral in Fig. 10 is basically to merely scan a light spot on the recording medium 18 in radial direction thereof, the optical deflector 13 may be substituted by a combination of an actuator 20 for driving an objective lens 14 radially and a transporting mechanism 21 for driving an optical system radially of the medium 18.

In operation, light from a light source 10 such as semiconductor laser is collimated by a collimator lens 12 to parallel light, condensed by the objective lens 14 to a light spot and directed to the recording medium 18. The recording medium 18 is, in this embodiment, a disc and adapted to be rotated in a direction shown by an arrow R around a center 18a thereof. The medium 18 is provided at angular positions thereof with headers 19 each containing positional information.

The light spot formed by the objective lens 14 is deflected by the optical deflector 13 to an arbitrary radial position on the medium 18. Figs. 3 and 4 show a principle of the wavelength selective recording and reproducing at a selected radial position of the medium 18.

In Fig. 3 which is a view of the medium 18 when looked at from the side of the objective lens 14, when the light spot is positioned in a position of the header 19 shown by a capital letter C on a radial position 22 arbitrarily selected by the optical deflector 13, the spot scans point C, point D, point E and point F sequentially in the order along the radial position line 22 with a rotation of the medium 18 in the direction R. In this case, wavelength of the light source 10 is not scanned but fixed at a ceratain value such as λ₁ or λ₂ . Due to the rotation of the disc medium 18 in the direction R, informations are recorded or reproduced in the point C, D, E and F sequentially at the fixed frequency λ₁, for example. That is, the time series signal is recorded or reproduced as a position series signal. The term "position series signal" used herein means a condition where a series of signals are recorded or reproduced sequentially while changing their positions along the radial position 22.

Fig. 4 which shows a concept of state of information recorded in the portions from the point C to the point F in Fig. 3 in succession. In this case, a unit of time series signal is expressed here as one record length defined by a distance between the headers at a specific wavelength, i.e., a distance between the points C and D at wavelength λ₁ or a distance between the points D and E at wavelength λ₃.

In a reproduction of information, a signal ( in this case, 1101010010..0 ) from the point C to the point D is detected at a fixed wavelength λ₂.

Since the time series signal is recoreded or reproduced as a position series signal, there is no such case as loss of one complete record length of time series signal even if a certain portion of the medium becomes defective and reproduction of information from that portion becomes impossible. In the present invention, possible loss of information in such situation may be several bits at most. Such small reproduction error can be corrected by means of the known error correcting method as will be well understood by those skilled in the art.

The unit of time series signal which is expressed here by one record length may be of around 1000 bits as usual. However, in order to make a longer time recording or reproducing of information possible, it is possible to lengthen the one record length or to record or reproduce the time series signal as continuous position series signal for a longer time, as will be described later.

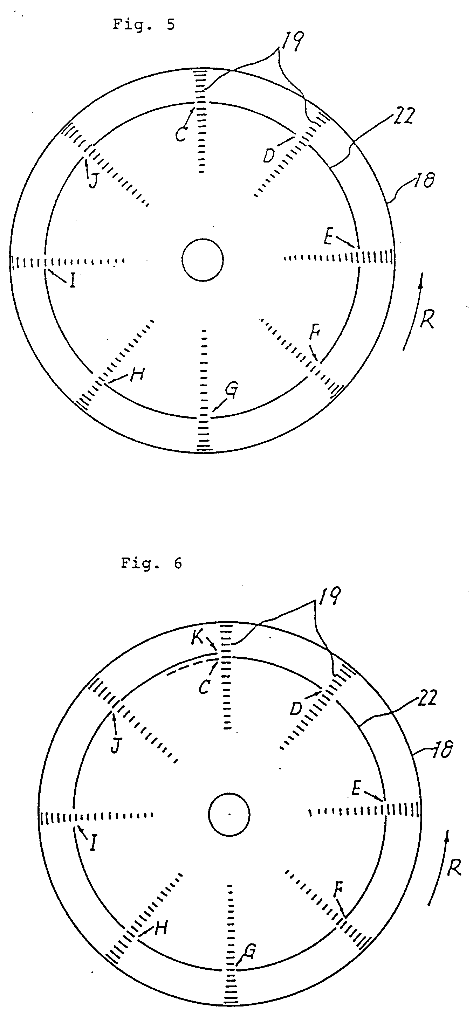

Now, a case where the wavelength is fixed for not one record length but one round of a circular disc medium is assumed. Figs. 5 and 6 show the principle of recording and reproducing under such condition, for a case where recording tracks are coaxial on the medium 18 and for a case where a single track is provided spirally on the disc medium 18, respectively.

In Fig. 5, an information is shifted from a point C to a point J, sequentially at a wavelength λ₁. In this case, due to the coaxial recording track, it is returned to the point C, finally. When the scan at wavelength λ₂ is returned to the point C, a new scan is performed along the same sequence at wavelength. This is repeated at wavelength λ₁ to λ n.

In Fig. 6, the information is shifted from a point C to a point J sequentially at wavelength λ₁. Since the recording track is spiral, it is not returned to the point C but to a point K which is shifted radially outwardly or inwardly of the point C although this figure shows the point K radially outwardly of the point C. At this point, the light spot is radially shifted from the point K to the point C on the medium 18 and then the same scan is performed at wavelength λ₂. This is repeated for the respective wavelengths λ₁ to λ n.

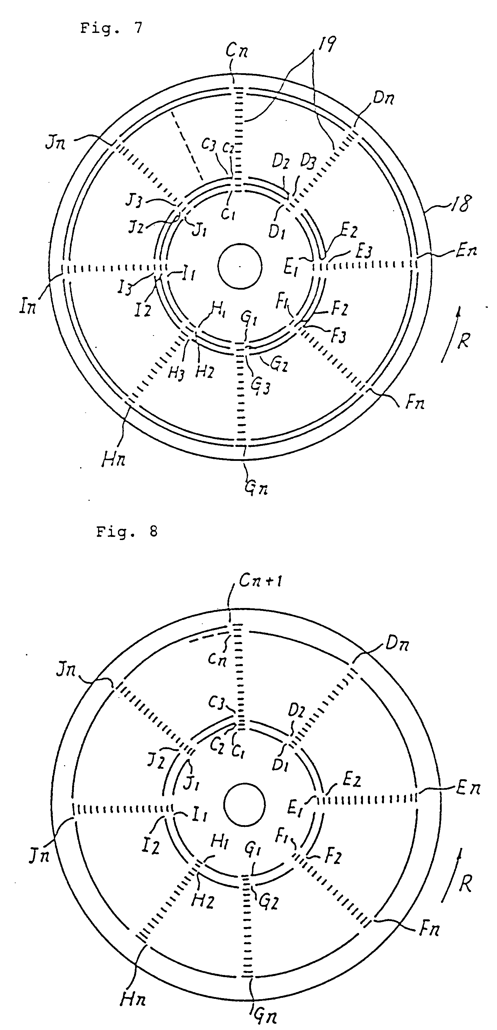

Figs. 7 and 8 show the principle of operation when the wavelength is fixed for not one round of the circular disc medium 18 but all of the coaxial tracks and a complete spiral track, respectively.

In Fig. 7, information is recorded or reproduced at wavelength λ₁ at a point C on the innermost track through points D, to a point J₁ , sequentially. At a time when it is returned to the point C₁, a light spot is shifted to a point C₂ on a next outside track and the same scan is repeated through points D₂ to C₂, and so on, with wavelength being fixed. When the scan for points Cn to Jn on the outermost track completes, the light spot is returned from the point Jn to the point C₁ and the scan is repeated in the same manner at wavelength λ₂. This is repeated until a scan at wavelength λ n completes.

In Fig. 8, since track is spiral, the scan is essentially continuously performed from a point C₁ to Cn+₁.

At the point Cn+1 , that is, when the spot reaches the outermost track portion, the spot is shifted radially inwardly to the point C₁ and the same operation is performed at wavelength λ . This is repeated for the respective wavelength up to λ n.

This recording and reproducing system is suitable to read and write a long time continuous information. That is, compared with the conventional system shown in Fig. 10 in which it is necessary in order to read or write an information long enough to use a plurality of memory elements 16 each having a capacity of the order of 1000 bits to move the light spot from one memory element to another sequentially by the optical deflector 13 under a complicated control, it is possible in the present invention to read or write continuously a long information covering one complete track or tracks of the disc at one wavelength and to repeat the same at respective wavelengths. This feature of the present invention may be utilized effectively in recording or reproducing a long audio or video information.

As a preferred application of the present invention is to a high speed random access retrieval of information. Fig. 12 shows a speed curve of a light spot in a radial direction of a circular optical disc medium at a high speed information retrieval by an optical recording and reproducing device ( cf. Proceedings of SPIE, vol.421, pages 85 to 90 ). As well known, a conventional high speed retrieval is performed by moving the light spot from a recording track to another track and so on. The light spot in such high speed retrieval may traverse as many as several thousands tracks. That is, as shown in Fig. 12, the light spot initially positioned in a track position shown by a point O on an abscissa is to be moved to an aimed track position shown by a point D. The light spot is accelerated in radial direction from the point O to a point A, moved at constant speed from the point A to a point B and decelerated to a point C near the end point D. Finally, the spot is moved finely to the point D. Since the movement of the light spot is performed by moving a whole optical system in radial direction, it takes a time as long as 100 msec to several hundreds msec to traverse such large number of tracks.

In the present invention, however, it is enough to scan a recording track or a plurality of closely arranged tracks by changing wavelength of light source. Therefore, time required to retrieve informations can be made much shorter than that required in the conventional system.

Another embodiment of the present invention will be described with reference to Fig. 9. In Fig. 9, a recording medium 18 is in the form of card which is scanned in directions shown by a double arrow S. In this embodiment, a time series signal having a length corresponding one record length is recorded and reproduced as position series signal at respective wavelength of scanning light. Therefore, it is possible to obtain a highly reliable optical recording and reproducing device. The length of the time series signal may be longer than one record length and the shift of light spot between tracks and the switching of light wavelength can be performed every recording track or after all tracks are scanned as in the previously mentioned embodiment.

As mentioned hereinbefore, according to the present invention, the time series signal is recorded or reproduced as the position series signal at respective light wavelengths. Therefore, the reliability of informtion recording and reproducing is much improved and a long time and high speed information recording and reproducing becomes possible.

## Claims

1. A method of optically recording and reproducing an information by condensing a light beam from a wavelength variable light source on recording tracks of a recording medium capable of being wavelength-selectively recorded and reproduced, comprising the steps of:
performing recording on or reproducing from a first track at a first predetermined wavelength at least during one information record comprising several thousand bits of information on said recording medium;
repeating the above step for other predetermined wavelengths and the same and/or other tracks sequentially.

2. The method as claimed in claim 1, wherein said recording medium has a spiral track or a plurality of coaxial tracks and wherein said recording or reproducing at said first predetermined wavelength is performed during at least one revolution of said recording medium and said recording and reproducing at said second predetermined wavelength is performed during at least one subsequent revolution of said recording medium, and repeating the above steps for other predetermined wavelengths sequentially.

3. The method as claimed in claim 1, wherein said recording medium has a plurality of recording tracks arranged coaxially or spirally and wherein said recording or reproducing at each of said predetermined wavelength is performed from an innermost one of said tracks to an outermost track of said tracks sequentially.

4. The method as claimed in claim 1, wherein said predetermined wavelength is switched to another on a single track or a plurality of adjacent tracks so that desired information can be recorded or reproduced at high speed in a random access manner.

5. The method as claimed in claim 1, wherein said recording medium is in the form of a card having linear recording tracks.

## Patentansprüche

1. Verfahren zum optischen Aufnehmen und Wiedergeben einer Information durch Konzentrieren eines Lichtstrahls aus einer wellenlängenveränderlichen Lichtquelle auf Aufnahmespuren eines Aufnahmemediums, die wellenlängenselektiv aufgenommen und wiedergegeben werden können, umfassend die Schritte:
Durchführen der Aufnahme auf, oder der Wiedergabe von einer ersten Spur mit einer ersten vorbestimmten Wellenlänge während mindestens eines Datensatzes, der mehrere tausend Informationsbits auf dem Aufnahmemedium umfaßt;
sequentielles Wiederholen des obigen Schrittes für andere vorbestimmte Wellenlängen und für die gleiche Spur und/oder für andere Spuren.

2. Verfahren nach Anspruch 1, bei dem das Aufnahmemedium eine spiralförmige Spur, oder eine Vielzahl koaxialer Spuren besitzt, und bei der das Aufnehmen oder Wiedergeben mit der ersten vorbestimmten Wellenlänge während mindestens einer einzelnen Umdrehung des Aufnahmemediums durchgeführt wird und bei der das Aufnehmen und Wiedergeben mit der zweiten vorbestimmten Wellenlänge während mindestens einer einzelnen anschließenden Umdrehung des Aufnahmemediums durchgeführt wird, und bei der die obigen Schritte sequentiell für andere vorbestimmte Wellenlängen wiederholt werden.

3. Verfahren nach Anspruch 1, bei dem das Aufnahmemedium eine Vielzahl von koaxial oder spiralig angeordneten Aufnahmespuren besitzt, und bei dem das Aufnehmen oder Wiedergeben bei jeder der vorbestimmten Wellenlängen sequentiell von einer innersten Spur der genannten Spuren zu einer äußersten Spur der genannten Spuren durchgeführt wird.

4. Verfahren nach Anspruch 1, bei der die vorbestimmte Wellenlänge nach einer anderen Wellenlänge auf einer benachbarten einzelnen Spur oder einer Vielzahl benachbarter Spuren umgeschaltet wird, so daß eine gewünschte Information mit hoher Geschwindigkeit im wahlfreien Zugriff aufgenommen oder wiedergegeben werden kann.

5. Verfahren nach Anspruch 1, bei dem das Aufnahmemedium die Form einer Karte besitzt, die lineare Aufnahmespuren aufweist.

## Revendications

1. Procédé d'enregistrement et de reproduction optique d'une information en concentrant un faisceau lumineux, venant d'une source lumineuse à longueur d'onde variable, sur des pistes d'enregistrement d'un support d'enregistrement capable d'être enregistré et reproduit de façon sélective en longueur d'onde, comprenant les étapes consistant à :
effectuer l'enregistrement sur une première piste ou la reproduction à partir de celle-ci, à une première longueur d'onde prédéterminée au moins pendant un enregistrement d'information comprenant plusieurs milliers de bits d'information sur ledit support d'enregistrement ;
répéter l'étape ci-dessus pour d'autres longueurs d'onde prédéterminées et la même piste, et/ou d'autres pistes, de manière séquentielle.

2. Procédé selon la revendication 1, dans lequel ledit support d'enregistrement a une piste en spirale ou une pluralité de pistes coaxiales et dans lequel ledit enregistrement ou ladite reproduction à ladite première longueur d'onde prédéterminée est effectué pendant au moins une rotation dudit support d'enregistrement, et ledit enregistrement ou ladite reproduction à ladite deuxième longueur d'onde prédéterminée est effectué pendant au moins une rotation suivante dudit support d'enregistrement, lesdites étapes ci-dessus étant répétées pour d'autres longueurs d'onde prédéterminées, de manière séquentielle.

3. Procédé selon la revendication 1, dans lequel ledit support d'enregistrement a une pluralité de pistes d'enregistrement disposées de manière coaxiale ou en spirale, et dans lequel ledit enregistrement ou ladite reproduction à chacune desdites longueurs d'onde prédéterminées est effectué depuis une piste située la plus à l'intérieur desdites pistes vers une piste la plus à l'extérieur desdites pistes, de manière séquentielle.

4. Procédé selon la revendication 1, dans lequel il y a passage de ladite longueur d'onde prédéterminée à une autre sur une seule piste ou une pluralité de pistes adjacentes, de telle manière que l'information désirée puisse être enregistrée ou reproduite à grande vitesse d'une manière à accès aléatoire.

5. Procédé selon la revendication 1, dans lequel ledit support d'enregistrement se présente sous la forme d'une carte ayant des pistes d'enregistrement linéaires.
